(19) Europäisches Patentamt European Patent Office Office européen des brevets

(11) **EP 4 242 420 B1**

(12) **EUROPEAN PATENT SPECIFICATION**

(45) Date of publication and mention of the grant of the patent:
**02.04.2025 Bulletin 2025/14**

(21) Application number: **23188477.6**

(22) Date of filing: **05.06.2019**

(51) International Patent Classification (IPC):
**E21B 43/12** *(2006.01)*     **E21B 47/11** *(2012.01)*

(52) Cooperative Patent Classification (CPC):
**E21B 43/122; E21B 47/11**

(54) **A METHOD FOR DETERMINING A PARAMETER OF A FLOW OF A PRODUCED FLUID IN A WELL**

VERFAHREN ZUR BESTIMMUNG EINES PARAMETERS EINES FLUSSES EINER ERZEUGTEN FLÜSSIGKEIT IN EINEM BOHRLOCH

PROCÉDÉ DE DÉTERMINATION D'UN PARAMÈTRE D'UN ÉCOULEMENT D'UN FLUIDE PRODUIT DANS UN PUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2018   NO 20180785**

(43) Date of publication of application:
**13.09.2023   Bulletin 2023/37**

(60) Divisional application:
**25159865.2**

(62) Document number(s) of the earlier application(s) in accordance with Art. 76 EPC:
**19814481.8 / 3 803 047**

(73) Proprietor: **Scanwell Technology AS**
**4033 Stavanger (NO)**

(72) Inventor: **Dima Shkorin, Daniel**
**4077 HUNDVÅG (NO)**

(74) Representative: **Håmsø Patentbyrå AS**
**P.O. Box 9**
**4068 Stavanger (NO)**

(56) References cited:
| | |
|---|---|
| WO-A1-01/65056 | WO-A1-2010/111475 |
| WO-A1-2015/191026 | WO-A1-2017/065863 |
| WO-A1-2018/056990 | US-A- 5 031 697 |

## Description

<u>Field of invention</u>

The present invention relates to a method for determining a flow rate of injection of a gas-lift gas into a well.

<u>Background</u>

In a wide range of contexts, it can be important to determine a parameter of a flow of a produced fluid in a well, e.g. to quantify a production rate from the well. For example, it can be important to quantify a flow rate in a well to investigate if the well is producing as expected, and to investigate effects of how changing a setting of a control unit may affect the production rate.

There exist flow meters that may be used to obtain a measurement of a flow rate of a fluid from a well. However, the flow meters are expensive, and the accuracy of the flow meters can often be poor. The flow meters may also require frequent replacement and/or maintenance to provide acceptable accuracy. Because of the disadvantages, many wells do not have a flow meter to quantify production rate.

Alternatively, to obtain a measurement of production rate from a well, the production line of the well can be connected to a test separator. This can be challenging: Some wells do not have test separators easily accessible. For some installations, it is necessary to acquire the services of a truck or a ship having a test separator and to connect said test separator to the well to be tested. Even when test separators are available on an installation site, and the test separator can easily be connected to the production line of a well, it may be inefficient to use the test separator. For example, if an operator wants to test the effect of a change of rate of injection of gas-lift gas into a well, it may take several days for the resulting rate of production to stabilize and to be obtainable from measurements by use of the test separator. In such cases, the production line of said well may occupy the test separator for a long time. This may be very problematic as test separator capacity can often be a limited resource. Furthermore, production from a well may be lost when the well is connected to the test separator.

Prior art document WO 2017/065863 A1 discloses a method of determining a rate of injection of a gas-lift gas into a well, wherein the well comprises a production flow line and an injection line, the injection line being connected to the production flow line, and wherein the method comprises the step of: injecting a tracer substance at a known rate of injection into the injection line at a first position in the injection line.

An object of the invention is to remedy or to reduce at least one of the drawbacks of prior art.

<u>Summary of the invention</u>

There is described a method for determining a parameter of a flow of a produced fluid in a well, which is not part of the claimed invention, the well comprising a production flow line and an injection line, the production flow line comprising a production bore of the well, the injection line being connected to the production flow line at a first location, and the well having a second location in the production flow line downstream of the first location, the method comprising the steps of:

- injecting a tracer substance from the injection line into the production flow line at the first location, wherein the tracer is injected at a known rate of injection;
- obtaining a measurement of the tracer substance in the produced fluid at the second location by use of a means for obtaining said measurement; and
- using the measurement of the tracer substance to determine the parameter of the flow of the produced fluid.

The parameter of a flow to be determined may be a parameter to quantify the flow, e.g. to quantify a rate of production. The method advantageously may not require production to be routed to a test separator to determine the parameter of the flow. The parameter may be a flow rate of the flow of produced fluid.

The means for obtaining said measurements may be means adapted to be connected to the production line with no need for diverting or stopping production.

A huge number of substances may be used as a tracer substance, including carbon dioxide, nitrogen, helium, argon, a radioactive material, or another substance.

Note that "a second location in the production line downstream of the first location" means a point in the production line away from the first location in the direction of the fluid flow in the production line. The fluid flow of produced fluid in the production line typically goes from an underground fluid reservoir towards a separator. Thus, first location may typically be closer to the reservoir than the second location, and the second location may typically be closer to the separator than the first location.

The first location may be a downhole location. The second location may be a topside location. "Downhole" refers to a position in a wellbore below the surface of a ground, whereas "topside" refers to a position above the surface.

A spectrometer or a chromatograph may be used as the means for obtaining said measurements. Other devices may be used as the means for obtaining said measurements. The means may be connected to the production line to determine which substances are present in the flow, and/or a concentration of present substances. It may primarily be of interest, for the execution of the method, to quantify and/or to find a concentration of the tracer substance in particular.

The measurement may be obtained continuously. Obtaining a continuous measurement may provide more and/or better information. A continuous measurement may e.g. provide a continuous flow pattern of the produced fluid over the duration of the continuous measurement.

When a rate of injection of tracer substance in the first location is known, and a concentration of the tracer substance in the second location is known, it may be possible to determine the total flow rate of fluid at the second location.

According to a first aspect of the disclosure, which is not part of the claimed invention, there is provided a method of improving a flow rate of produced fluid in a well, the well comprising a production flow line and an injection line, the production flow line comprising a production bore of the well, the injection line being connected to the production flow line at a first location and the well having a second location in the production flow line downstream of the first location, the well comprising a control unit that may be adjusted to affect the flow rate of produced fluid from the well, wherein the control unit is a valve for adjusting a rate of injection of gas-lift gas, the method comprising the steps of:

- injecting a tracer substance from the injection line into the production flow line at the first location, wherein the tracer is injected at a known rate of injection;
- obtaining a first measurement of the tracer substance in the produced fluid at the second location by use of a means for obtaining said measurement while producing fluid using the first setting of the control unit;
- using the first measurement of the tracer substance to determine a first parameter of the flow of the produced fluid
- adjusting the control unit to a second setting;
- obtaining a second measurement of the tracer substance in the produced fluid at the second location by use of the means for obtaining said measurement while producing fluid using the second setting of the control unit;
- using the second measurement of the tracer substance to determine a second parameter of the flow of the produced fluid; and
- comparing the first parameter to the second parameter to determine an effect of changing the setting of the control unit.

The step of comparing the first parameter to the second parameter to determine an effect of changing the setting of the control unit may comprise the step of determining which of the first setting and the second setting that results in a best flow rate of produced fluid in the well. The method may comprise the step of choosing the setting resulting in the best production rate as a setting for the well, to improve the flow rate of produced fluid in the well.

A well typically has one or more valves or other control units that may be adjusted wherein said adjustment may affect a rate of production of produced fluid from the well. Among the examples are a control unit to adjust a rate of injection of gas-lift gas for a gas-lift well, and a control unit in the production line. Said control unit may typically be a control valve, a butterfly valve or a choke valve.

When altering a setting of a control unit, it may not be clear in advance what effect the change of setting will have on the rate of production. Advantageously, with the method according to the method, it may not be necessary to route production to a test separator to determine the effect. By obtaining a first measurement of a tracer substance prior to changing said setting and a second measurement of tracer substance after changing said setting, it is possible to determine an effect of the change.

The measurement of the tracer substance in the produced fluid may be a measurement of the tracer substance in a produced gas. Wells may typically produce a mixture of gas and liquid, and it may be possible and advantageous for the measurement to be a measurement of a gas portion of the total produced fluid and to thereafter correlate the resulting determined parameter of and/or effect on the produced gas to a corresponding parameter of and/or effect on the produced liquid. The produced liquid may typically comprise oil. The correlation may be made as a gas/oil ratio (GOR) and a gas/liquid ratio (GLR) in the produced fluid may be known and substantially constant over a period of time. An increase or decrease to e.g. a production rate of a gas may therefore easily be used to determine a corresponding increase or decrease to a production rate of a liquid.

The step of obtaining a measurement of the tracer substance may include determining a concentration of the tracer in a flow of fluid at the second location.

The step of using the measurement of the tracer substance to determine the parameter of the flow may include dividing the known rate of injection by the determined concentration of the tracer substance in the flow at the second location.

The produced fluid at the second location may typically comprise a reservoir fluid from a fluid reservoir. The reservoir fluid may comprise a plurality of substances.

If the reservoir fluid does not comprise the tracer substance, a rate of flow of production fluid may be determined by using the following formula:

$$Q_{f2} = {Q_{ti1}}/{c_{t2}}$$

where:

$Q_{f2}$ is flow rate of a produced fluid in the second lo-

cation;

$Q_{ti1}$ is flow rate of tracer injected in the first location; and

$c_{t2}$ is concentration of tracer in the second location.

$Q_{f2}$ may be a flow rate of a gas.

If $Q_{f2}$ is a flow rate of a gas, an approximate flow rate of oil, $Q_O$, may be found simply by dividing $Q_{f2}$ with the gas/oil ratio, GOR:

$$Q_O = {Q_{f2}}/{GOR}.$$

Likewise, an approximate flow rate of liquid, $Q_L$, may be found simply by dividing $Q_{f2}$ with the gas/liquid ratio, GLR:

$$Q_L = {Q_{f2}}/{GLR}.$$

The method may thus be used to determine a parameter of flow of liquid and/or oil, in addition to the parameter of the parameter of flow of gas. The method may be used to determine a flow rate of all phases of a multiphase flow.

The substance used as a tracer substance may be present in the reservoir fluid as one of the plurality of substances.

If the substance used as a tracer substance is present in the reservoir fluid, the reservoir liquid may be saturated with said tracer substance. In that case, the injected tracer substance may not become absorbed by a liquid of the reservoir fluid. Instead, the injected tracer may follow the fluid flow fully as a component of the gas of the produced fluid.

The step of determining a concentration of the tracer substance may comprise:

- determining a first concentration of tracer substance, the first concentration of tracer substance being the concentration of tracer substance in the reservoir fluid; and
- determining a second concentration of tracer substance, the second concentration of tracer substance being the concentration of tracer substance in the produced fluid including both the reservoir fluid and the injected tracer substance.

The step of using the measurement of the tracer substance to determine the parameter of the flow of the produced fluid may comprise using the first concentration of tracer substance and the second concentration of tracer substance.

If the reservoir fluid does comprise the tracer substance, a rate of flow of production fluid in the second location may be determined by using the following formula:

$$Q_{f2} = \frac{Q_{ti1} - Q_{ti1} * c_2}{\Delta c}$$

where:

$Q_{f2}$ is flow rate of fluid in the second location;

$Q_{ti1}$ is flow rate of tracer injected in the first location;

$c_2$ is a the second determined concentration; and

$\Delta c$ is the difference in concentration from the first concentration, $c_1$, to the second concentration, $c_2$:

$$\Delta c = c_2 - c_1$$

The tracer substance may be injected in a flow of fluid including a gas-lift gas. This may typically be the case if the method is to be applied to a gas-lift well. The well may be a gas-lift well.

The injection line may be a chemical injection line or a gas lift injection line.

The parameter of the flow may be related to a quantification of the flow.

A plurality of different settings of the control unit may be used. At least one measurement of the tracer substance at the second location may be obtained for each of the different settings by use of the means for obtaining the measurement. The plurality of measurements may be used to determine a best setting for improving the flow rate of the produced fluid from the well.

By trying a plurality of different settings, it is possible to determine a setting that is a best setting of the plurality of settings. This may be regarded as a method to optimize a rate of production from a well.

The method according to the first aspect of the disclosure may be applied to a plurality of wells sharing a source of gas-lift gas, to determine a best distribution of gas-lift gas to the wells for improving the flow rate of produced fluid from each well to obtain a best total production of fluid from the plurality of wells.

It is not uncommon for a plurality of gas-lift wells to share a source of gas-lift gas. The source of gas-lift gas may not have the capacity to sufficiently provide each well with the optimal amount of gas-lift gas for the well. It may then be advantageous to apply the method according to the invention to a number or all of the gas-lift wells to determine a best distribution of gas-lift gas to achieve a best rate of total production from the wells.

The control unit may be a choke valve.

The control unit, which may be a choke valve, may be placed in the production line, downstream of the first location.

The described method, and/or the method according to the first aspect of the disclosure may comprise the step of determining a rate of injection of the tracer substance.

The step of determining the rate of injection of the tracer substance may comprise using a device for measuring an amount of flow of fluid and/or using a device for determining a concentration of a substance in a flow of fluid.

The device for measuring an amount of flow of fluid may be a flow meter. The device for determining a concentration of a substance in a flow of fluid may be a chromatograph or a spectrometer.

The described method, and/or the disclosure according to the first aspect of the disclosure may comprise the step of determining a rate of injection of injected gas-lift gas.

The step of determining the rate of injection of injected gas-lift gas comprises using a device for measuring an amount of flow of fluid and/or using a device for determining a concentration of a substance in a flow of fluid.

To accurately quantify production from the reservoir, it may be necessary to determine a rate of injection of injected gas-lift gas. Some wells may have gas-injection lines comprising a flow meter that may give an accurate reading of said rate. Other wells may have a flow meter where the accuracy is not sufficient or not known or may not have a flow meter at all. It may then be necessary to connect a flow meter to said injection line, or to determine the rate of injection by use of other means.

The method may further comprise a step of determining a production rate of a fluid from a reservoir by subtracting a gas-lift gas injection rate from a determined production flow rate. The production rate of the fluid from the reservoir may be a production rate of a gas from the reservoir, and the determined production flow rate may be the production flow rate of a gas. The gas may be a gas in a multiphase flow.

The device for determining a concentration of a substance in a flow of fluid may be a spectrometer or a chromatograph. The step of determining the rate of injection may then comprise adding a known quantity of tracer substance and/or injecting a tracer substance at a known rate of injection into the injection line in a first position in the injection line, and then to use the device for determining a concentration of a substance in a flow of fluid to determine the concentration of the tracer substance at a second position in the injection line, where the second position is downstream of the first position.

According to a second aspect of the disclosure, which is part of the claimed invention, there is provided a method for determining a rate of injection of a gas-lift gas into a well, the well comprising a production flow line and an injection line, the injection line being connected to the production flow line, the method comprising the following steps:

- injecting a tracer substance at a known rate of injection into the injection line at a first location in the injection line;
- using a device for determining a concentration of the tracer substance in the injection line at a second location in the injection line, downstream of the first location in the injection line.

The method according to the second aspect of the invention may comprise steps described above.

In a third aspect of the disclosure, which is not part of the claimed invention, there is provided an apparatus for performing the method according to the first aspect of the invention and for determining a parameter of a flow of a produced fluid from a well, the apparatus comprising:

- a production flow line comprising a production bore;
- an injection line connected to the production flow line at a first location in the production flow line;
- a control unit that may be adjusted to affect the flow rate of produced fluid from the well (3), wherein the control unit is a valve for adjusting a rate of injection of gas-lift gas; and
- a means for obtaining a measurement of a tracer substance at a second location in the production flow line, the second location being downstream of the first location.

The apparatus may alternatively to being an apparatus for performing the method according to the first aspect of the invention, or additionally to being an apparatus for performing the method according to the first aspect of the invention, be an apparatus for performing the method according to the second aspect of the invention.

The means for obtaining a measurement of the tracer substance may be a means for measuring a concentration of the tracer substance. The means for measuring a concentration may be a spectrometer or a chromatograph. The apparatus may advantageously be used to perform the method described above.

The apparatus may further comprise a container for containing the tracer substance. The container may be connected to the injection line for supplying the tracer substance into the injection line.

Furthermore, the apparatus may comprise a device for measuring an amount of flow of fluid and/or a device for determining a concentration of a substance in a flow of fluid, wherein the device or the devices may be arranged for determining a rate of fluid flowing through the injection line.

The apparatus may further have a control unit to adjust an injection rate of an injected fluid and/or substance. The control unit may be arranged to the injection line. The apparatus may further have a control unit to adjust a production flow rate arranged to the production flow line.

Description and drawings

In the following is described examples of preferred embodiments illustrated in the accompanying drawings, wherein:

Fig. 1    shows a schematic representation of a first embodiment of an apparatus for determining a parameter of a flow of a produced fluid from a well;

Fig. 2    shows a schematic representation of a second embodiment of the apparatus; and

Fig. 3    shows a schematic representation of a third embodiment of the apparatus.

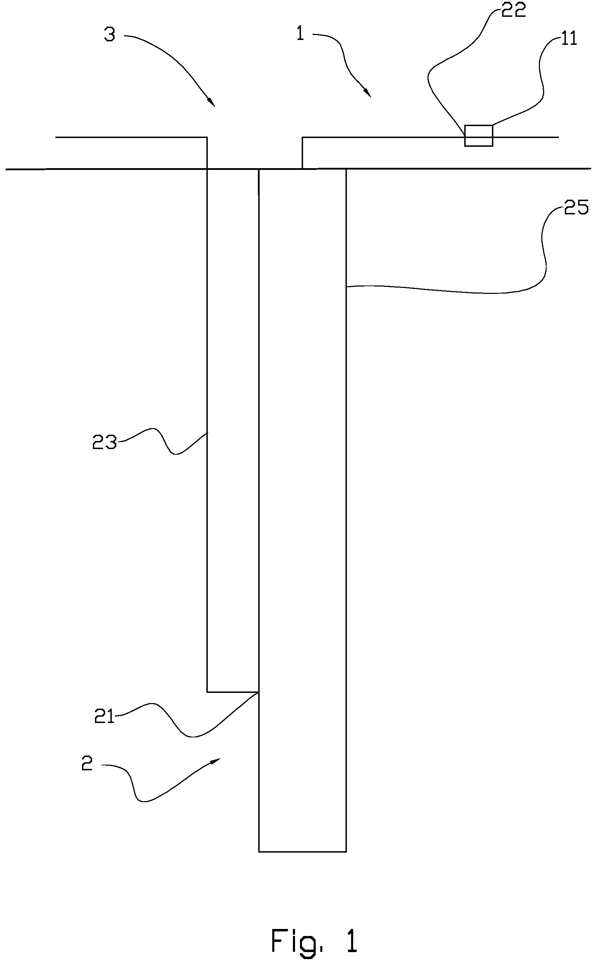

Figure 1 shows an apparatus 1 for determining a parameter of a flow of a produced fluid from a well 3. The well has a production flow line 2 comprising a production bore 25 and an injection line 23 connected to the production flow line 2 in a first location 21 of the production flow line 2. In a second location 22 of the production flow line 2, a spectrometer 11 for obtaining a measurement of a tracer substance is arranged to obtain a measurement of the tracer substance in a flow of fluid. The flow of fluid is a mixture of a reservoir fluid from a reservoir (not shown) and a fluid injected from the injection line into the production flow line in the first location 21. The direction of flow is from the reservoir, through the first location 21, towards and through the second location 22. Thus, the second location 22 can be said to be downstream of the first location 21.

A method for determining a parameter of a flow of a produced fluid in the well 3, using the apparatus 1, is performed as follows:
A tracer substance is injected into the production flow line 2 at the first location 21, the tracer substance being injected at a known rate of injection. The spectrometer 11 obtains a measurement of the tracer substance at the second location 22. More precisely, the spectrometer 11 obtains a measurement of a concentration of the tracer substance in the flow of fluid in the second location 22 of the production flow line 2. Then, the measurement of concentration of tracer substance is used to determine the parameter of the flow of the produced fluid. More precisely, the flow rate of produced fluid is determined.

When the flow rate of injected tracer substance in the first location 21, $Q_{ti1}$, is known, and the concentration of tracer substance in the second location 22, $c_{t2}$, is determined, the flow rate in the second location 22, $Q_{f2}$, can be determined by using the following formula:

$$Q_{f2} = {Q_{ti2}}/{c_{t2}}.$$

The produced fluid measurement of concentration of tracer substance in this embodiment is a concentration of tracer substance of a flow of gas in the flow of fluid. $Q_{f2}$, therefore, is a flow rate of the gas. The total produced fluid in the second location comprises both gas and oil, and the GOR is known. As the GOR is known and is substantially constant (for a period of time), the flow of oil can be determined by using the following formula:

$$Q_o = {Q_{f2}}/{GOR}.$$

The above-mentioned calculation can be used if the tracer substance is not present in the reservoir fluid. If the tracer substance is present in the reservoir fluid as one of a plurality of substances that makes out the fluid, it must be determined a concentration of the tracer substance in the reservoir fluid without the injected tracer substance, $c_1$, a concentration of the tracer substance in the produced fluid with injected tracer substance, $c_2$, and an increase in concentration, $\Delta c$, where $\Delta c = c_2 - c_1$.

**The flow rate** of gas in the second location 22 in the production flow line 2 may be determined using the following formula: $Q_{f2} = Q_{ti2} / \Delta_c$. The flow rate of oil may thereafter be determined as above.

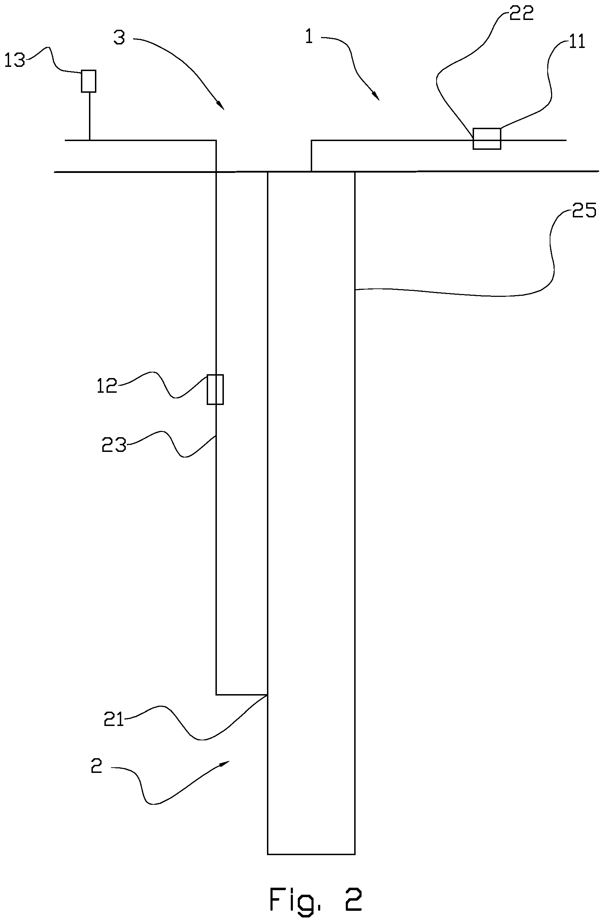

Figure 2 shows the apparatus in a second embodiment, wherein the apparatus has all the same parts as in Figure 1 and additionally a device 13 for supplying tracer substance into the injection line connected to the injection line in a first position in the injection line and a spectrometer 12 connected to the injection line in a second position in the injection line. The second position is downstream of the first position in the injection line.

By use of the device 13, tracer substance is added to the fluid stream in the injection line at a known rate. The spectrometer 12 is used to determine a concentration of the tracer substance in the second position in the injection line.

By knowing the rate of supply of tracer substance in the first position in the injection line, $Q_t$, and determining the concentration of the tracer substance in the second position in the injection line, $c_t$, a rate of injection of gas from the injection line into the production flow line, $Q_{ig}$, can be determined:

$$Q_{ig} = {Q_t}/{c_t}.$$

It can be important to know the injection rate to accurately determine the production rate from a reservoir. When the production flow rate, $Q_{f2}$, is determined, and the injection rate, $Q_{ig}$, is determined, the production rate from the reservoir, $Q_r$, can be determined by subtracting the injection rate from the production flow rate:

$$Q_r = Q_{f2} - Q_{ig}.$$

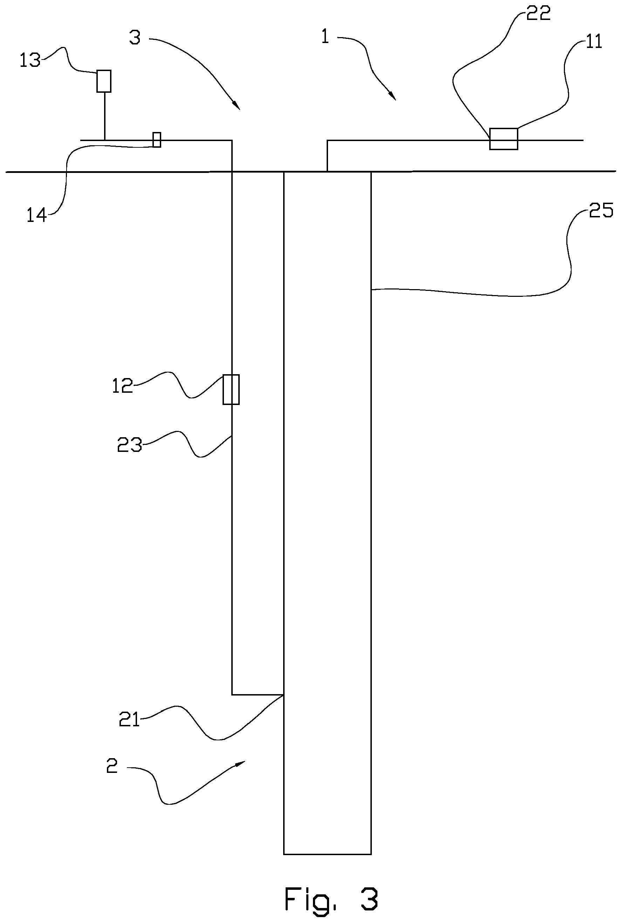

Figure 3 shows an embodiment having a control unit 14 in the form of a choke valve 14 in the injection line 23 to adjust an injection rate of a gas-lift gas. The injection line 23 further has a spectrometer 12 for determining a concentration of an injected tracer substance placed downstream of a device 13 for supplying tracer substance into the injection line 23.

Furthermore, the embodiment in Figure 3 has a spectrometer 11 in a second location 22 in the production flow line 2 downstream of a first location 21, where the injection line 23 connects to the production flow line 2. The first location 21 is downhole, whereas the second location is topside.

By use of the choke valve 14, it is possible to change the rate of injection of gas-lift gas into the well, and thus to affect a production flow rate in the production flow line 2. By use of the spectrometer 12 in the injection line 23, it is possible to accurately quantify the injection rate, and by use of the spectrometer 11 in the production flow line 2 it is possible to accurately quantify the production flow rate.

With the apparatus shown in Figure 3 it is possible to change an injection rate, determine the injection rate, affect the production flow rate, determine the production flow rate, and, through determining the injection rate and the resulting production flow rate for a plurality of different injection rates, to determine an injection rate that leads to a better production flow rate than other injection rates.

The embodiment shown in Figure 3 is highly advantageous compared to prior art, as to find a resulting flow rate from a change of injection rate with no need for connecting the production flow line to a separator.

The embodiment and method are particularly advantageous for an installation site having multiple wells sharing a limited, same source of gas-lift gas, to find a gas-lift gas distribution to the wells for good and/or improved and/or optimal total production from the wells.

The scope of protection of the current invention is defined by the appended claims.

**Claims**

1. A method of determining a rate of injection of a gas-lift gas into a well (3), the well (3) comprising a production flow line (2) and an injection line (23), the injection line (23) being connected to the production flow line (2), the method comprising the following steps:

   - injecting a tracer substance at a known rate of injection into the injection line (23) at a first position in the injection line (23);
   - using a device (12) for determining a concentration of the tracer substance in the injection line (23) at a second position in the injection line (23), wherein the second position is downstream of the first position in the injection line (23).

2. The method according to claim 1, wherein the device (12) is a spectrometer.

3. The method according to claim 1 or 2, wherein the injection line (23) is connected to the production flow line (2) in a first location (21) of the production flow line (2).

4. The method according to any preceding claim, wherein a rate of injection of gas from the injection line (23) into the production flow line (2) is determined by dividing the known rate of injection of the tracer substance into the injection line (23) at the first position in the injection line (23) by the determined concentration of the tracer substance in the injection line (23) at the second position in the injection line (23).

5. The method according to claim 4, wherein when a production flow rate of the production flow line (2) is known, the production rate from a reservoir is determined by subtracting the rate of injection of gas from the injection line (23) into the production flow line (2) from the production flow rate of the production flow line (2).

6. The method according to claim 5, wherein the fluid produced by the reservoir at a second location (22) of the production flow line (2) comprises both gas and oil.

7. The method according to claim 6, wherein the gas/oil ratio is known and substantially constant over a period of time.

8. The method according to claim 7, wherein a flow of oil is determined by dividing the production rate from the reservoir by the gas/oil ratio.

**Patentansprüche**

1. Verfahren zum Bestimmen einer Injektionsrate eines Gasfördergases in ein Bohrloch (3), das Bohrloch (3) umfassend eine Förderfliessleitung (2) und eine Injektionsleitung (23), wobei die Injektionsleitung (23) mit der Förderfliessleitung (2) verbunden ist, das Verfahren umfassend die folgenden Schritte:

   - Einspritzen einer Indikatorsubstanz mit einer bekannten Injektionsrate in die Injektionsleitung (23) an einer ersten Position in der Injektionsleitung (23);
   - Verwenden einer Vorrichtung (12) zum Bestimmen einer Konzentration der Indikatorsubstanz in der Injektionsleitung (23) an einer zweiten Position in der Injektionsleitung (23), wobei die zweite Position stromabwärts der ersten Position in der Injektionsleitung (23) liegt.

2. Verfahren nach Anspruch 1, wobei die Vorrichtung (12) ein Spektrometer ist.

3. Verfahren nach Anspruch 1 oder 2, wobei die Injektionsleitung (23) mit der Förderfliessleitung (2) an einer ersten Stelle (21) der Förderfliessleitung (2) verbunden ist.

4. Verfahren nach einem der vorstehenden Ansprüche, wobei eine Injektionsrate von Gas aus der Injektionsleitung (23) in die Förderfliessleitung (2) bestimmt wird durch Dividieren der bekannten Injektionsrate der Indikatorsubstanz in die Injektionsleitung (23) an der ersten Position in der Injektionsleitung (23) durch die bestimmte Konzentration der Indikatorsubstanz in der Injektionsleitung (23) an der zweiten Position in der Injektionsleitung (23).

5. Verfahren nach Anspruch 4, wobei, wenn eine Förderfliessrate der Förderfliessleitung (2) bekannt ist, die Förderrate aus einem Reservoir bestimmt wird durch Subtrahieren der Injektionsrate von Gas aus der Injektionsleitung (23) in die Förderfliessleitung (2) von der Förderfliessrate der Förderfliessleitung (2).

6. Verfahren nach Anspruch 5, wobei das durch das Reservoir an einer zweiten Stelle (22) der Förderfliessleitung (2) produzierte Fluid sowohl Gas als auch Öl umfasst.

7. Verfahren nach Anspruch 6, wobei das Gas/Öl-Verhältnis bekannt und im Wesentlichen über einen Zeitraum konstant ist.

8. Verfahren nach Anspruch 7, wobei ein Fluss von Öl bestimmt wird durch Dividieren der Förderrate aus dem Reservoir durch das Gas/Öl-Verhältnis.

**Revendications**

1. Procédé de détermination d'un taux d'injection d'un gaz d'extraction de gaz dans un puits (3), le puits (3) comprenant une conduite (2) d'écoulement de production et une conduite (23) d'injection, la conduite (23) d'injection étant connectée à la conduite (2) d'écoulement de production, le procédé comprenant les étapes suivantes :

   - l'injection d'une substance de traceur à un taux d'injection connu dans la conduite (23) d'injection à une première position dans la conduite (23) d'injection ;
   - à l'aide d'un dispositif (12) de détermination d'une concentration de la substance de traceur dans la conduite (23) d'injection à une seconde position dans la conduite (23) d'injection, dans lequel la seconde position est en aval de la première position dans la conduite (23) d'injection.

2. Procédé selon la revendication 1, dans lequel le dispositif (12) est un spectromètre.

3. Procédé selon la revendication 1 ou la revendication 2, dans lequel la conduite (23) d'injection est connectée à la conduite (2) d'écoulement de production dans un premier emplacement (21) de la conduite (2) d'écoulement de production.

4. Procédé selon l'une des revendications précédentes, dans lequel un taux d'injection de gaz de la conduite (23) d'injection dans la conduite (2) d'écoulement de production est déterminé en divisant le taux d'injection connu de la substance de traceur dans la conduite (23) d'injection à la première position dans la conduite (23) d'injection par la concentration déterminée de la substance de traceur dans la conduite (23) d'injection à la seconde position dans la conduite (23) d'injection.

5. Procédé selon la revendication 4, dans lequel lorsqu'un taux d'écoulement de production de la conduite (2) d'écoulement de production est connu, le taux de production d'un réservoir est déterminé en soustrayant le taux d'injection de gaz de la conduite (23) d'injection dans la conduite (2) d'écoulement de production du taux d'écoulement de production de la conduite (2) d'écoulement de production.

6. Procédé selon la revendication 5, dans lequel le fluide produit par le réservoir à un second emplacement (22) de la conduite (2) d'écoulement de production comprend à la fois du gaz et du pétrole.

7. Procédé selon la revendication 6, dans lequel le rapport gaz/pétrole est connu et sensiblement constant sur une période de temps.

8. Procédé selon la revendication 7, dans lequel un écoulement d'huile est déterminé en divisant le taux de production du réservoir par le rapport gaz/huile.

Fig. 1

Fig. 2

Fig. 3

**EP 4 242 420 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017065863 A1